# EUROPÄISCHE PATENTSCHRIFT

(11) **EP 2 470 756 B1**
(45) Veröffentlichungstag und Bekanntmachung des Hinweises auf die Patenterteilung: **11.09.2013**
(21) Anmeldenummer: 10737067.8
(22) Anmeldetag: 29.07.2010
(51) Int. Cl.: F01L 1/344, F16K 27/04, F16K 11/07

(54) **STEUERVENTIL**
CONTROL VALVE
VANNE DE COMMANDE

(30) Priorität: 29.08.2009 DE 102009039384
(43) Veröffentlichungstag der Anmeldung: 04.07.2012
(73) Patentinhaber: Schaeffler Technologies AG & Co. KG, 91074 Herzogenaurach (DE)
(72) Erfinder: BAYRAKDAR, Ali, 90552 Röthenbach/Pegnitz (DE)
(86) Internationale Anmeldenummer: PCT/EP2010/061004
(87) Internationale Veröffentlichungsnummer: WO 2011/045095

(56) Entgegenhaltungen:
- US-A1- 2007 095 315

## Beschreibung

### Gebiet der Erfindung

Die Erfindung betrifft ein Steuerventil mit einem im Wesentlichen zylindrisch ausgebildeten Ventilgehäuse und einem im Wesentlichen zylindrisch ausgebildeten Steuerkolben, wobei das Steuerventil innerhalb einer zylindrischen Aufnahme angeordnet werden kann und wobei der Steuerkolben innerhalb des Ventilgehäuses axial verschiebbar angeordnet ist.

### Hintergrund der Erfindung

Steuerventile werden in modernen Brennkraftmaschinen beispielsweise zur Steuerung von Vorrichtungen zur variablen Einstellung der Steuerzeiten von Gaswechselventilen eingesetzt, mit denen die Phasenrelation zwischen einer Kurbelwelle und einer Nockenwelle in einem definierten Winkelbereich, zwischen einer maximalen Früh- und einer maximalen Spätposition, variabel gestaltet werden kann. Die Vorrichtung steht in Antriebsverbindung mit einer Kurbelwelle und ist drehfest mit einer Nockenwelle verbunden und weist mehrer Druckkammern auf mittels derer durch Druckmittelzufuhr, bzw. -abfuhr eine Phasenrelation zwischen der Kurbelwelle und der Nockenwelle gezielt verändert werden kann. Die Druckmittelzufuhr zu und die Druckmittelabfuhr von den Druckkammern wird mittels eines Steuerventils gesteuert.

Eine Vorrichtung und ein Steuerventil sind beispielsweise aus der DE 102 11 468 A1 und aus US 2007/0095315 A1 bekannt. Die Vorrichtung umfasst ein Abtriebselement, welches drehbar zu einem Antriebselement angeordnet und drehfest mit einer Nockenwelle verbunden ist. Das Antriebselement steht in Antriebsverbindung mit einer Kurbelwelle. Innerhalb der Vorrichtung sind mehrere gegeneinander wirkende Druckkammern vorgesehen mittels derer die Phasenlage des Abtriebselements relativ zu dem Antriebselement innerhalb eines definierten Winkelbereichs gezielt eingestellt werden kann. Somit kann eine gezielte Verdrehung der Nockenwelle relativ zu der Kurbelwelle bewirkt werden.

Die Nockenwelle ist mittels mehrerer Nockenwellenlager in einem Zylinderkopf der Brennkraftmaschine gelagert. Über eines der Nockenwellenlager wird einem in der Nockenwelle ausgebildeten Druckmittelkanal Druckmittel zugeführt, welches über ein Steuerventil, das in einer Aufnahme der Nockenwelle angeordnet ist, in die Druckkammern geleitet werden kann.

Das Steuerventil besteht aus einem Ventilgehäuse und einem in dem Ventilgehäuse axial verschiebbar aufgenommenen Steuerkolben. Das Ventilgehäuse weist mehrere hydraulische Anschlüsse auf, wobei ein Zulaufanschluss mit einer Druckmittelpumpe, zwei Arbeitsanschlüsse mit den Druckkammern und ein Ablaufanschluss mit einem Druckmittelreservoir der Brennkraftmaschine kommunizieren. Der Steuerkolben kann mittels einer elektromagnetischen Stelleinheit gegen die Kraft eines Federelements in axialer Richtung relativ zu dem Ventilgehäuse positioniert werden, wodurch die Arbeitsanschlüsse mit dem Ablaufanschluss bzw. dem Zulaufanschluss verbunden und somit die Druckmittelströme von und zu den Druckkammern gesteuert werden.

### Aufgabe der Erfindung

Der vorliegenden Erfindung liegt die Aufgabe zugrunde, ein Steuerventil anzugeben, wobei dessen Montageaufwand verringert werden soll.

### Zusammenfassung der Erfindung

Die Aufgabe wird erfindungsgemäß dadurch gelöst, dass das Ventilgehäuse aus zumindest zwei axialen Teilabschnitten besteht, wobei sich deren in Umfangsrichtung offene Enden in Umfangsrichtung gegenüberstehen und aneinander anliegen.

Das erfindungsgemäße Steuerventil weist kein in sich geschlossenes Ventilgehäuse auf, sondern ist aus Teilabschnitten aufgebaut, die in Umfangsrichtung offene Enden aufweisen. Während der Montage werden die Teilabschnitte zusammengesetzt, so dass sich deren offene Enden in Umfangsrichtung gegenüberstehen und aneinander zur Anlage kommen. Dabei können die Teilabschnitte lose aneinander anliegen oder die offenen Enden der Teilabschnitte form- oder stoffschlüssig miteinander verbunden sein. Das Ventilgehäuse kann beispielsweise aus einem geeigneten Kunststoff bestehen und beispielsweise mittels eines Spritzgiessverfahrens hergestellt sein.

Das Ventilgehäuse weist mehrere hydraulische Anschlüsse, insbesondere zumindest einen Zulaufanschluss, einen Ablaufanschluss und zwei Arbeitsanschlüsse auf, wobei der Ablaufanschluss mit einem Druckmittelreservoir, der Zulaufanschluss mit einer Druckmittelpumpe und die Arbeitsanschlüsse mit den Druckkammern verbunden sind. Mittels des Steuerkolbens können die Arbeitsanschlüsse selektiv mit dem Zulaufanschluss oder dem Ablaufanschluss verbunden werden.

Die Teilabschnitte können sich beispielsweise über die gesamte axiale Länge des Ventilgehäuses erstrecken und beispielsweise in Form von Halbschalen ausgebildet sein.

Durch die mehrteilige Ausbildung des Ventilgehäuses wird der Zusammenbau des Steuerventils erheblich vereinfacht. Die im montierten Zustand innerhalb des Ventilgehäuses angeordneten Bauteile, wie beispielsweise der Steuerkolben, ein Federelement oder eine Zwischenhülse, können in diesem Fall einfach in einen der Teilabschnitte eingelegt werden. Anschließend werden der andere bzw. die anderen Teilabschnitte positioniert und gegebenenfalls die offenen Enden miteinander verbunden. Im Vergleich zu einteiligen Ventilgehäusen, bei denen sämtliche Bauteile durch eine Axialöffnung in den Hohlraum des Ventilgehäuses eingeführt werden müssen, wird ein automatisierter Zusammenbau erheblich vereinfacht.

In einer vorteilhaften Weiterbildung wird vorgeschlagen, dass an zumindest einem der Teilabschnitte zwei axial zueinander beabstandete Axialanschläge für den Steuerkolben, eine Federaufnahme zur Aufnahme eines Federelements, welches auf den Steuerkolben wirkt und/oder eine Rückschlagventilaufnahme für einen Schließkörper eines Rückschlagventils ausgebildet ist.

Durch die mehrteilige Ausbildung des Ventilgehäuses, können die Bauteile in einen der Teilabschnitte eingelegt werden und müssen nicht mehr durch eine Axialöffnung in den Hohlraum des Ventilgehäuses eingeschoben werden. Somit können an dem Ventilgehäuse zusätzliche Funktionalitäten, wie beispielsweise Axialanschläge für den Steuerkolben in beiden Richtungen, ausgebildet werden, ohne dass der Zusammenbau des Steuerventils dadurch gestört würde.

Des Weiteren können auf einfache Weise auch Strukturen ausgebildet werden, die bei einem einteiligen Aufbau des Ventilgehäuses nur mit erheblichem Mehraufwand möglich wären. Beispielsweise können Hohlräume innerhalb des Ventilgehäuses zwischen zwei radial verlaufenden Wänden realisiert werden, beispielsweise zur Aufnahme eines Federblechs, welches als Schließkörper eines Reed-Rückschlagventils mit einer Öffnung in der radialen Wand zusammenwirkt.

In einer vorteilhaften Weiterbildung der Erfindung kann vorgesehen sein, dass an einer Innenmantelfläche des Ventilgehäuses eine Hülse anliegt, wobei deren Orientierung relativ zu dem Ventilgehäuse mittels an zumindest einem der Teilabschnitte ausgebildeter Positionierelemente festgelegt ist. Somit ist ein Steuerventil mit einem Ventilgehäuse und zwischen dem Ventilgehäuse und dem Steuerkolben angeordneter Hülse realisiert, wobei die Orientierung der Hülse relativ zu dem Ventilgehäuse festgelegt ist. Dabei werden durch die mehrteilige Ausbildung des Ventilgehäuses Probleme bei dem Zusammenbau vermieden. Die Positionierelemente können sich ausgehend von einer Innenmantelfläche des Ventilgehäuses radial nach innen erstrecken und beispielsweise in Vertiefungen oder Radialöffnungen der Hülse eingreifen und so die Orientierung der Hülse in Umfangsrichtung festlegen.

In einer Konkretisierung der Erfindung kann vorgesehen sein, dass zwei Teilabschnitte über eine scharnierartige Verbindung miteinander verbunden sind. Die beiden Teilabschnitte können beispielsweise gleichzeitig in einem Spritzgusswerkzeug gefertigt werden. Während der Montage sind diese beiden Bauteile schwenkbar verbunden. Somit wird die Montage weiter vereinfacht, da nach dem Einlegen des Steuerkolbens, des Federelements und gegebenenfalls weiterer Bauteile die beiden Teilabschnitte in axialer Richtung bereits zueinander positioniert sind und nur noch zusammengeklappt werden müssen.

In einer Weiterbildung der Erfindung ist vorgesehen, dass an jedem der Teilabschnitte zumindest ein Formschlusselement ausgebildet ist, mittels dem ein Sicherungsring an dem Ventilgehäuse befestigt ist. Dadurch werden zum Einen die Teilabschnitte aneinander fixiert und gleichzeitig der Sicherungsring, der zur Fixierung des Steuerventils in einer Aufnahme dienen kann, an dem Ventilgehäuse fixiert. Dabei kann vorgesehen sein, dass an einer axialen Seitenfläche jedes Teilabschnitts zumindest ein hakenförmiges Formschlusselement ausgebildet ist, das radial nach außen offen ausgebildet ist und den Sicherungsring in axialer Richtung hintergreift, so dass der Sicherungsring sowohl an der axialen Seitenfläche des Ventilgehäuses als auch an einem sich radial erstreckenden Abschnitt des hakenförmigen Formschlusselements anliegt und beide Teilabschnitte relativ zueinander in Position hält. Alternativ oder zusätzlich kann die Position des Ventilgehäuses in einer Aufnahme mittels des Sicherungsrings festgelegt sein.

### Kurze Beschreibung der Zeichnungen

Weitere Merkmale der Erfindung ergeben sich aus der nachfolgenden Beschreibung und aus den Zeichnungen in denen Ausführungsbeispiele der Erfindung vereinfacht dargestellt sind. Es zeigen:
- Figur 1: nur sehr schematisch eine Brennkraftmaschine,
- Figur 2: einen Längsschnitt durch eine Vorrichtung zur variablen Einstellung der der Steuerzeiten von Gaswechselventilen einer Brennkraftmaschine mit einem erfindungsgemäßen Steuerventil,
- Figur 3: einen Querschnitt durch die Vorrichtung aus Figur 2 entlang der Linie III-III,
- Figur 4: eine vergrößerte Ansicht der Figur 2, wobei nur die Nockenwelle und das Steuerventil dargestellt sind und die Schnittebene um 45° in Umfangsrichtung gekippt wurde,
- Figur 5: das Steuerventil aus Figur 4 in einer Explosionsdarstellung,
- Figur 6: eine Draufsicht auf das Steuerventil entlang des Pfeils VI in Figur 4,
- Figur 7: eine weitere erfindungsgemäße Ausführungsform eines Steuerventils in einer Darstellung analog zu Figur 4.

### Ausführliche Beschreibung der Zeichnungen

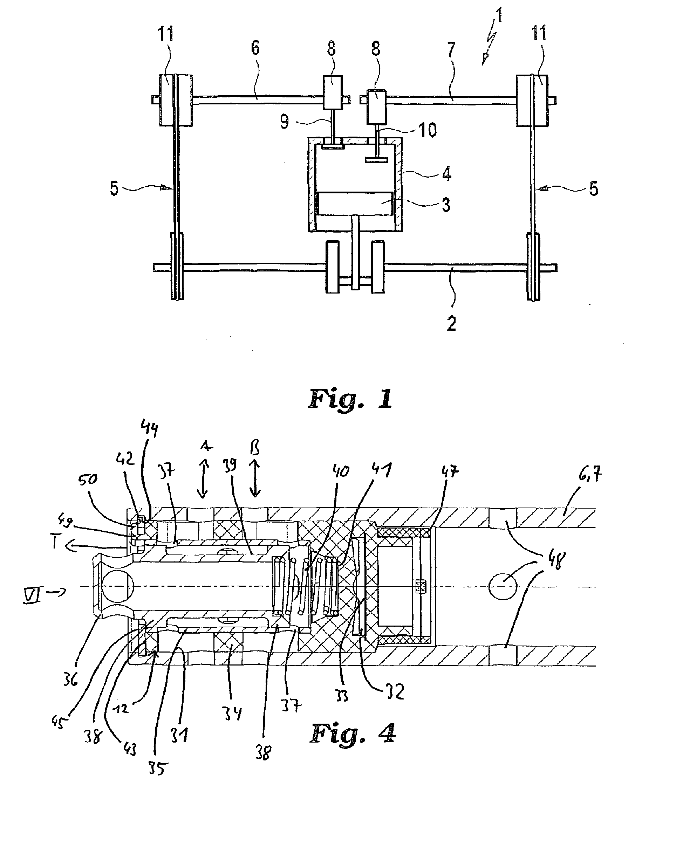

In Figur 1 ist eine Brennkraftmaschine 1 skizziert, wobei ein auf einer Kurbelwelle 2 sitzender Kolben 3 in einem Zylinder 4 angedeutet ist. Die Kurbelwelle 2 steht in der dargestellten Ausführungsform über je einen Zugmitteltrieb 5 mit einer Einlassnockenwelle 6 bzw. Auslassnockenwelle 7 in Verbindung, wobei eine erste und eine zweite Vorrichtung 11 zur variablen Einstellung der Steuerzeiten von Gaswechselventilen 9, 10 einer Brennkraftmaschine 1 für eine Relativdrehung zwischen Kurbelwelle 2 und den Nockenwellen 6, 7 sorgen können. Nocken 8 der Nockenwellen 6, 7 betätigen ein oder mehrere Einlassgaswechselventile 9 bzw. ein oder mehrere Auslassgaswechselventile 10. Ebenso kann vorgesehen sein nur eine der Nockenwellen 6, 7 mit einer Vorrichtung 11 auszustatten, oder nur eine Nockenwelle 6, 7 vorzusehen, welche mit einer Vorrichtung 11 versehen ist.

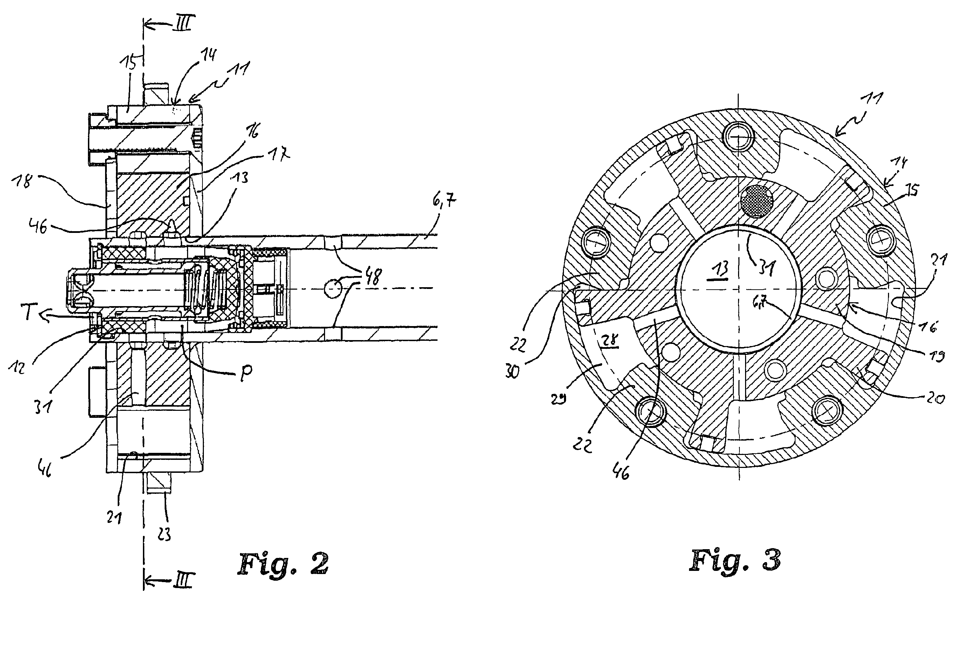

Die Figuren 2 und 3 zeigen eine Vorrichtung 11 im Längs- bzw. im Querschnitt, wobei in Figur 2 zusätzlich eine Nockenwelle 6, 7 und ein erfindungsgemäßes Steuerventil 12 dargestellt sind.

Die Vorrichtung 11 umfasst ein Antriebselement 14 und ein Abtriebselement 16. Das Antriebselement 14 besteht aus einem Gehäuse 15 und zwei Seitendeckeln 17, 18, die an den axialen Seitenflächen des Gehäuses 15 angeordnet und mittels Schrauben an diesem befestigt sind. Das Abtriebselement 16 ist in Form eines Flügelrades ausgeführt und weist ein im Wesentlichen zylindrisch ausgeführtes Nabenelement 19 auf, von dessen äußerer zylindrischer Mantelfläche sich in der dargestellten Ausführungsform fünf Flügel 20 in radialer Richtung nach außen erstrecken.

Ausgehend von einer äußeren Umfangswand 21 des Gehäuses 15 erstrecken sich fünf Vorsprünge 22 radial nach innen. In der dargestellten Ausführungsform sind die Vorsprünge 22 und die Flügel 20 einteilig mit der Umfangswand 21 bzw. dem Nabenelement 19 ausgebildet. Ebenso denkbar sind Ausführungsformen, in denen die Flügel 20 und oder die Vorsprünge 22 als separat gefertigte Bauteile ausgebildet sind, die nachträglich an dem entsprechenden Bauteil montiert sind. Das Antriebselement 14 ist mittels radial innen liegender Umfangswände der Vorsprünge 22 relativ zu dem Abtriebselement 16 drehbar auf diesem gelagert.

An einer äußeren Mantelfläche des ersten Gehäuses 15 ist ein Kettenrad 23 ausgebildet, über das mittels eines nicht dargestellten Kettentriebs Drehmoment von der Kurbelwelle 2 auf das Antriebselement 14 übertragen werden kann. Das Abtriebselement 16 weist eine Zentralöffnung 13 auf, die von der Nockenwelle 6,7 durchgriffen wird. Dabei ist das Abtriebselement 16 mittels einer Presspassung drehfest an der Nockenwelle 6, 7 befestigt.

Innerhalb der Vorrichtung 11 ist zwischen jeweils zwei in Umfangsrichtung benachbarten Vorsprüngen 22 ein Druckraum 28 ausgebildet. Jeder der Druckräume 28 wird in Umfangsrichtung von gegenüberliegenden, im Wesentlichen radial verlaufenden Begrenzungswänden benachbarter Vorsprünge 22, in axialer Richtung von den Seitendeckeln 17, 18, radial nach innen von dem Nabenelement 19 und radial nach außen von der Umfangswand 21 begrenzt. In jeden der Druckräume 28 ragt ein Flügel 20, wobei die Flügel 20 derart ausgebildet sind, dass diese sowohl an den Seitendeckeln 17, 18, als auch an der Umfangswand 21 anliegen. Jeder Flügel 20 teilt somit den jeweiligen Druckraum 28 in zwei gegeneinander wirkende Druckkammern 29, 30.

Durch Druckbeaufschlagung einer Gruppe von Druckkammern 29, 30 und Druckentlastung der anderen Gruppe kann die Phasenlage des Antriebselements 14 zum Abtriebselement 16 und damit die Phasenlage der Nockenwelle 6, 7 zur Kurbelwelle 2 variiert werden. Durch Druckbeaufschlagung beider Gruppen von Druckkammern 29, 30 kann die Phasenlage konstant gehalten werden.

Die Druckmittelversorgung der Vorrichtung 11 erfolgt über das Innere der Nockenwelle 6, 7, die in der dargestellten Ausführungsform hohl ausgeführt ist, und ein in einer Aufnahme 31 der Nockenwelle 6, 7 angeordnetes Steuerventil 12.

Figur 4 zeigt das Steuerventil 12 innerhalb der Nockenwelle 6, 7 in einer vergrößerten Darstellung. Das Steuerventil 12, weist ein im Wesentlichen hohlzylindrisch ausgeführtes Ventilgehäuse 34, eine zylindrische Hülse 35 und einen im Wesentlichen hohlzylindrischen Steuerkolben 36 auf.

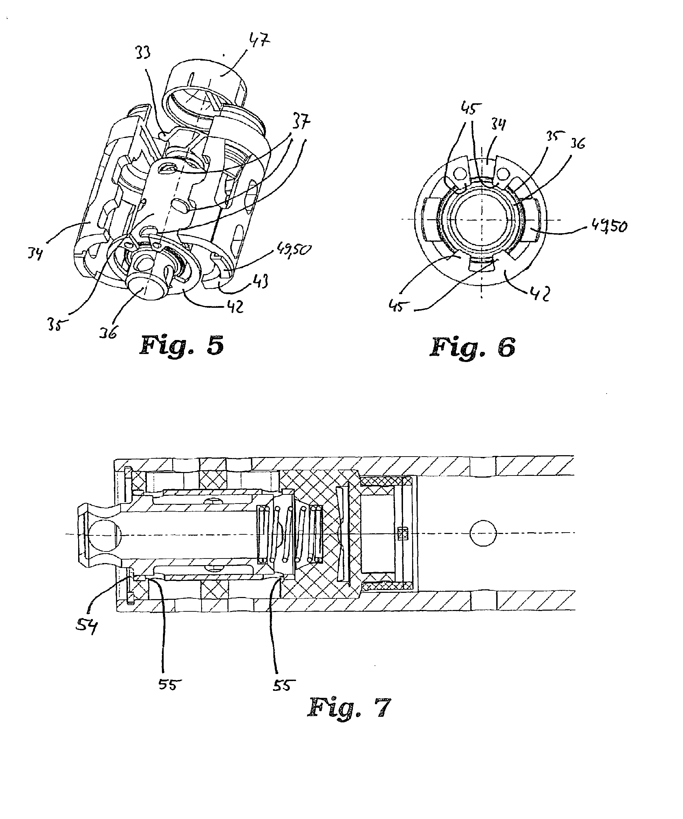

An dem Ventilgehäuse 34 sind ein radialer Zulaufanschluss P, zwei radiale Arbeitsanschlüsse A, B und ein axialer Ablaufanschluss T ausgebildet. Der Ablaufanschluss T ist als axiale Öffnung an dem Ventilgehäuse 34 ausgebildet. Die Arbeitsanschlüsse A, B sind als radiale Öffnungen an der Mantelfläche des Ventilgehäuses 34 ausgebildet, wobei jeder der Arbeitsanschlüsse A, B über in dem Abtriebselement 16 ausgebildete Druckmittelkanäle 46 mit einer Gruppe von Druckkammern 29, 30 kommuniziert. Der Zulaufanschluss P ist ebenfalls als radiale Öffnung an der Mantelfläche des Ventilgehäuses 34 ausgebildet, wobei dieser in Umfangsrichtung versetzt zu den Arbeitsanschlüssen A, B angeordnet und als Langloch ausgebildet ist (Figur 5). Der Zulaufanschluss P erstreckt sich in axialer Richtung bis zu einer Rückschlagventilaufnahme 32, die über eine nicht dargestellte Axialöffnung mit dem Inneren der Nockenwelle 6, 7 kommuniziert. In der Rückschlagventilaufnahme 32 ist ein Federblech 33 angeordnet, welches gegen die nicht dargestellte Axialöffnung vorgespannt ist, so dass ein Rückschlagventil realisiert ist, welches einen Druckmittelfluss von der Nockenwelle 6, 7 zu dem Zulaufanschluss P zulässt und einen entgegengesetzten Druckmittelfluss sperrt. Stromaufwärts des Rückschlagventils ist ein topfförmiges Filterelement 47 an dem Ventilgehäuse 34 befestigt.

Das Ventilgehäuse 34 ist innerhalb der Nockenwelle 6, 7 angeordnet, wobei dessen axiale Position durch eine an der Innenmantelfläche der Nockenwelle 6, 7 und der Außenmantelfläche des Ventilgehäuses 34 ausgebildeten Schulter und einen Sicherungsring 42 festgelegt wird. Der Sicherungsring 42 überragt das Ventilgehäuse 34 in radialer Richtung, ist in einer Ringnut 44, die an der Innenmantelfläche der Nockenwelle 6, 7 ausgebildet ist, angeordnet und liegt an einer axialen Seitenfläche 43 des Ventilgehäuses 34 an.

Das Ventilgehäuse 34 besteht aus zwei separat zueinander hergestellten axialen Teilabschnitten 52 in Form von Halbschalen, die sich jeweils entlang der gesamten axialen Ausdehnung des Ventilgehäuses 34 erstrecken. Jeder der Teilabschnitte 52 weist zwei in Umfangsrichtung offene Enden 53 auf, wobei jedes der offenen Enden 53 einem offenen Ende 53 des anderen Teilabschnitts 52 in Umfangsrichtung gegenübersteht. Die offenen Enden 53 der Teilabschnitte 52 können im montierten Zustand des Steuerventils 12 lose aneinander anliegen oder stoff- bzw. formschlüssig miteinander verbunden sein. Denkbar sind beispielsweise Schnappverbindungen, Reißverschlussverbindungen, Klebeverbindungen oder Verbindungen mittels Ultraschallschweißens. Ebenfalls denkbar sind Ausführungsformen, in denen jeweils ein offenes Ende 53 der Teilabschnitte 52 mittels einer dünnen Materialschicht schwenkbar miteinander verbunden sind, so dass eine scharnierartige Verbindung hergestellt ist.

Innerhalb des Ventilgehäuses 34 ist die Hülse 35 angeordnet, deren Außendurchmesser dem Innendurchmesser des Ventilgehäuses 34 angepasst ist. Die Hülse 35 weist mehrere Öffnungen 37 auf, wobei jede der Öffnungen 37 mit einem der Arbeitsanschlüsse A, B oder dem Zulaufanschluss P kommuniziert.

Innerhalb der Hülse 35 ist der Steuerkolben 36 axial verschiebbar aufgenommen. Der Steuerkolben 36 weist zwei Steuerabschnitte 38 auf, deren Außendurchmesser dem Innendurchmesser der Hülse 35 angepasst sind. Zwischen den Steuerabschnitten 38 ist eine ringförmig um den Steuerkolben 36 umlaufende Nut 39 vorgesehen.

Der Steuerkolben 36 kann mittels einer nicht dargestellten elektromagnetischen Stelleinheit, welche auf das der Nockenwelle 6, 7 abgewandte Ende des Steuerkolbens 36 wirkt, gegen die Kraft eines Federelements 40 in axialer Richtung relativ zu dem Ventilgehäuse 34 positioniert werden. Das Federelement 40 ist in einer an dem Ventilgehäuse 34 ausgebildeten Federaufnahme 41 angeordnet und stützt sich einerseits an der Federaufnahme 41 und andererseits an Steuerkolben 36 ab. Dabei wird der Weg des Steuerkolbens 36 in axialer Richtung einerseits durch die Federaufnahme 41 und andererseits durch sich radial nach innen erstreckende Abschnitte 45 des Sicherungsrings 42 begrenzt (Figur 4-6).

Abhängig von der Stellung des Steuerkolbens 36 relativ zu dem Ventilgehäuse 34 ist einer der Arbeitsanschlüsse A, B mit dem Zulaufanschluss P verbunden, wobei gleichzeitig der andere Arbeitsanschluss A, B direkt oder über das Innere des Steuerkolbens 36 mit dem Ablaufanschluss T verbunden ist. Dabei sind an den Steuerabschnitten 38 des Steuerkolbens 36 und den Öffnungen 37 der Hülse 35 Steuerkanten ausgebildet, mittels derer die Druckmittelströme gesteuert werden.

Durch die mehrteilige Ausbildung des Ventilgehäuses 34 wird die Herstellung des Steuerventils 12 erheblich vereinfacht. Zunächst können sämtliche Bauteile (Steuerkolben 36, Hülse 35, Federelement 40, Federblech 33), in einen der Teilabschnitte 52 eingelegt werden. In einem weiteren Schritt wird der zweite Teilabschnitt 52 an dem ersten positioniert und gegebenenfalls die Verbindung zwischen den Teilabschnitten 52 hergestellt. Dies erleichtert einen automatisierten Zusammenbau erheblich, da die Bauteile nicht mehr über eine Axialöffnung in das Innere des Ventilgehäuses 34 eingeschoben werden müssen sondern in eine der Halbschalen eingelegt werden können.

Während des Betriebs der Brennkraftmaschine 1 wird von einer nicht dargestellten Druckmittelpumpe dem Inneren der Nockenwelle 6, 7 über Nockenwellenöffnungen 48 Druckmittel zugeführt. Das Druckmittel gelangt durch das Filterelement 47, über die nicht dargestellte Axialöffnung in dem Ventilgehäuse 34 und das Federblech 33 zu dem Zulaufanschluss P und von dort in einen ringförmigen Raum, der von der an dem Steuerkolben 36 ausgebildeten Nut 39 und der Hülse 35 begrenzt wird.

Abhängig von der Stellung des Steuerkolbens 36 relativ zu dem Ventilgehäuse 34 wird das Druckmittel zu den ersten oder den zweiten Druckkammern 29, 30 geleitet. Gleichzeitig gelangt Druckmittel von den anderen Druckkammern 29, 30 über den Ablaufanschluss T zu einem nicht dargestellten Druckmittelreservoir der Brennkraftmaschine 1. Dadurch erfolgt eine Veränderung der Phasenlage des Abtriebselements 16 relativ zu dem Antriebselement 14 und damit der Nockenwelle 6, 7 relativ zur Kurbelwelle 2. Ist die gewünschte Phasenlage erreicht verschiebt die nicht dargestellte elektromagnetische Stelleinheit den Steuerkolben 36 in eine Neutralstellung, in der beiden Gruppen von Druckkammern 29, 30 Druckmittel zugeführt wird, so dass die relative Phasenlage konstant gehalten wird.

An der axialen Seitenfläche 43 an der der Sicherungsring 42 anliegt ist an jedem der Teilabschnitte 52 ein hakenförmiges Formschlusselement 49 ausgebildet. Die Formschlusselemente 49 sind radial nach außen offen ausgeführt. Jedes der Formschlusselemente 49 erstreckt sich ausgehend von der Seitenfläche 43 zunächst in axialer Richtung und weist einen sich daran anschlieβenden radialen Abschnitt 50 auf. Die Formschlusselemente 49 hintergreifen den Sicherungsring 42 in axialer Richtung, so dass dieser zwischen der axialen Seitenfläche 43 und den radialen Abschnitten 50 verliersicher aufgenommen wird. Während des Zusammenbaus des Steuerventils 12 wird zunächst die Hülse 35, das Federelement 40 und der Steuerkolben 36 in einen der Teilabschnitte 52 eingelegt. In einem darauffolgenden Arbeitsschritt wird der zweite Teilabschnitt 52 an dem ersten Teilabschnitt positioniert und gegebenenfalls die aneinander anliegenden offenen Enden 53 miteinander verbunden. Anschließend wird der geschlitzte Sicherungsring 42 mittels einer in Umfangsrichtung gerichteten Kraft elastisch aufgebogen, an der Seitenfläche 43 positioniert und die Krafteinwirkung beendet, so dass der Sicherungsring 42 seine ursprüngliche Form kleineren Durchmessers wieder einnimmt und somit an dem Ventilgehäuse 34 befestigt ist. Somit ist durch den Sicherungsring 42 eine zusätzliche Befestigung der beiden Teilabschnitte 52 aneinander realisiert. Anschließend wird das topfförmige Filterelement 47 über das andere axiale Ende des Ventilgehäuses 34 geschoben, wodurch die Verbindung der Teilabschnitte 52 weiter verstärkt wird. Auf Grund der sich radial nach innen erstreckenden Abschnitte 45 sind sowohl die Hülse 35 als auch der Steuerkolben 36 und damit das Federelement 40 verliersicher in dem Ventilgehäuse 34 aufgenommen, so dass das gesamte Steuerventil 12 als Baugruppe an die Montagelinie geliefert werden kann, ohne dass ein Verlust von Bauteilen zu befürchten ist. Während der Montage des Steuerventils 12 in der Nockenwelle 6, 7 wird das Steuerventil 12 in diese eingeschoben, bis die Schulter des Ventilgehäuses 34 an der Schulter der Nockenwelle 6, 7 zur Anlage kommt. Dabei wird der Sicherungsring 42 beim Eintritt in die Nockenwelle 6, 7 elastisch gestaucht. Im Bereich der Ringnut 44 weitet sich der Sicherungsring 42 auf und greift selbsttätig in diese ein, so dass die axiale Position des Steuerventils 12 innerhalb der Nockenwelle 6, 7 festgelegt ist. Neben der einfachen Montage des Steuerventils 12 in der Nockenwelle 6, 7 besteht ein Vorteil des erfindungsgemäßen Steuerventils 12 in Einsteckbauweise darin, dass dieses als Modul an die Montagelinie geliefert werden kann ohne dass ein Verlust eines der Bauteile Steuerkolben 36, Federelement 40, Sicherungsring 42, Hülse 35 zu befürchten ist.

Figur 7 zeigt eine weitere Ausführungsform eines erfindungsgemäßen Steuerventils 12 analog zu der Darstellung in Figur 4. Im Unterschied zu der ersten Ausführungsform ist einteilig an einem der beiden Teilabschnitte 52 ein Axialanschlag 54 für den Steuerkolben 36 ausgebildet. Dies ist möglich, da der Steuerkolben 36 und die Hülse 35 nicht in axialer Richtung in das Ventilgehäuse 34 eingeschoben werden müssen, sondern in einen der Teilabschnitte 52 eingelegt werden.

Darüber hinaus sind an den Teilabschnitten 52 sich radial nach innen erstreckende Positionierelemente 55 ausgebildet, die in die Öffnungen 37 der Hülse 35 eingreifen. Somit ist eine sichergestellt, dass die Hülse während des Zusammenbaus des Steuerventils 12 in Umfangsrichtung korrekt zu dem Ventilgehäuse 34 orientiert wird und die Orientierung auch während des Betriebs beibehalten wird.

Die Ventilgehäuse 34 können beispielsweise aus Stahl, Aluminium oder Kunststoff gefertigt sein.

### Bezugszeichen

- 1: Brennkraftmaschine
- 2: Kurbelwelle
- 3: Kolben
- 4: Zylinder
- 5: Zugmitteltrieb
- 6: Einlassnockenwelle
- 7: Auslassnockenwelle
- 8: Nocken
- 9: Einlassgaswechselventil
- 10: Auslassgaswechselventil
- 11: Vorrichtung
- 12: Steuerventil
- 13: Zentralöffnung
- 14: Antriebselement
- 15: Gehäuse
- 16: Abtriebselement
- 17: Seitendeckel
- 18: Seitendeckel
- 19: Nabenelement
- 20: Flügel
- 21: Umfangswand
- 22: Vorsprung
- 23: Kettenrad
- 24: -
- 25: -
- 26: -
- 27: -
- 28: Druckraum
- 29: erste Druckkammer
- 30: zweite Druckkammer
- 31: Aufnahme
- 32: Rückschlagventilaufnahme
- 33: Federblech
- 34: Ventilgehäuse
- 35: Hülse
- 36: Steuerkolben
- 37: Öffnung
- 38: Steuerabschnitt
- 39: Nut
- 40: Federelement
- 41: Federaufnahme
- 42: Sicherungsring
- 43: Seitenfläche
- 44: Ringnut
- 45: Abschnitt
- 46: Druckmittelkanal
- 47: Filterelement
- 48: Nockenwelleöffnungen
- 49: Formschlusselement
- 50: radialer Abschnitt
- 51: Durchgangsöffnung
- 52: Teilabschnitt
- 53: offenes Ende
- 54: Axialanschlag
- 55: Positionierelemente
- A: erster Arbeitsanschluss
- B: zweiter Arbeitsanschluss
- P: Zulaufanschluss
- T: Ablaufanschluss

## Patentansprüche

1. Steuerventil (12) mit einem im Wesentlichen zylindrisch ausgebildeten Ventilgehäuse (34) und einem im Wesentlichen zylindrisch ausgebildeten Steuerkolben (36),
- wobei das Steuerventil (12) innerhalb einer zylindrischen Aufnahme (31) angeordnet werden kann und
- wobei der Steuerkolben (36) innerhalb des Ventilgehäuses (34) axial verschiebbar angeordnet ist,
- **dadurch gekennzeichnet, dass** das Ventilgehäuse (34) aus zumindest zwei axialen Teilabschnitten (52) besteht, wobei sich deren in Umfangsrichtung offene Enden (53) in Umfangsrichtung gegenüberstehen und aneinander anliegen.

2. Steuerventil (12) nach Anspruch 1, **dadurch gekennzeichnet, dass** die offenen Enden (53) der Teilabschnitte (52) form- oder stoffschlüssig miteinander verbunden sind.

3. Steuerventil (12) nach Anspruch 1, **dadurch gekennzeichnet, dass** an zumindest einem der Teilabschnitte (52) zwei axial zueinander beabstandete Axialanschläge (54) für den Steuerkolben (36) ausgebildet sind.

4. Steuerventil (12) nach Anspruch 1, **dadurch gekennzeichnet, dass** an zumindest einem der Teilabschnitte (52) eine Federaufnahme (41) zur Aufnahme eines Federelements (40), welches auf den Steuerkolben (36) wirkt, ausgebildet ist.

5. Steuerventil (12) nach Anspruch 1, **dadurch gekennzeichnet, dass** an zumindest einem der Teilabschnitte (52) eine Rückschlagventilaufnahme (32) für einen Schließkörper (33) eines Rückschlagventils ausgebildet ist.

6. Steuerventil (12) nach Anspruch 1, **dadurch gekennzeichnet, dass** an einer Innenmantelfläche des Ventilgehäuses (34) eine Hülse (35) anliegt, wobei deren Orientierung relativ zu dem Ventilgehäuse (34) mittels an zumindest einem der Teilabschnitte ausgebildeter Positionierelemente (55) festgelegt ist.

7. Steuerventil (12) nach Anspruch 1, **dadurch gekennzeichnet, dass** die Teilabschnitte (52) aus Kunststoff ausgebildet sind.

8. Steuerventil (12) nach Anspruch 1, **dadurch gekennzeichnet, dass** an jedem der Teilabschnitte (52) zumindest ein Formschlusselement (49) ausgebildet ist, mittels dem ein Sicherungsring (42) an dem Ventilgehäuse (34) befestigt ist.

9. Steuerventil (12) nach Anspruch 8, **dadurch gekennzeichnet, dass** an einer axialen Seitenfläche (43) jedes Teilabschnitts (52) zumindest ein hakenförmiges Formschlusselement (49) ausgebildet ist, das radial nach außen offen ausgebildet ist und den Sicherungsring (42) in axialer Richtung hintergreift, so dass der Sicherungsring (42) sowohl an der axialen Seitenfläche (43) des Ventilgehäuses (34) als auch an einem sich radial erstreckenden Abschnitt (50) des hakenförmigen Formschlusselements (49) anliegt und beide Teilabschnitte (52) relativ zueinander in Position hält.

10. Steuerventil (12) nach Anspruch 8, **dadurch gekennzeichnet, dass** die Position des Ventilgehäuses (34) in einer Aufnahme (31) mittels des Sicherungsrings (42) festgelegt ist.

11. Steuerventil (12) nach Anspruch 1, **dadurch gekennzeichnet, dass** zwei Teilabschnitte (52) über eine scharnierartige Verbindung miteinander verbunden sind.

## Claims

1. Control valve (12) with an essentially cylindrically designed valve housing (34) and with an essentially cylindrically designed control piston (36),
- the control valve (12) being capable of being arranged inside a cylindrical receptacle (31), and
- the control piston (36) being arranged axially displaceably inside the valve housing (34),
- **characterized in that** the valve housing (34) is composed of at least two axial subsections (52), their ends (53) open in the circumferential direction standing opposite one another in the circumferential direction and bearing one against the other.

2. Control valve (12) according to Claim 1, **characterized in that** the open ends (53) of the subsections (52) are connected to one another positively or in a materially integral way.

3. Control valve (12) according to Claim 1, **characterized in that** there be formed, on at least one of the subsections (52), two axially spaced-apart axial stops (54) for the control piston (36).

4. Control valve (12) according to Claim 1, **characterized in that** a spring receptacle (41) for receiving a spring element (40) which acts on the control piston (36) is formed on at least one of the subsections (52).

5. Control valve (12) according to Claim 1, **characterized in that** a nonreturn valve receptacle (32) for a closing body (33) of a nonreturn valve is formed on at least one of the subsections (52).

6. Control valve (12) according to Claim 1, **characterized in that** a sleeve (35) bears against an inner surface area of the valve housing (34), the orientation of which sleeve in relation to the valve housing (34) being defined by means of positioning elements (55) formed on at least one of the subsections.

7. Control valve (12) according to Claim 1, **characterized in that** the subsections (52) are produced from plastic.

8. Control valve (12) according to Claim 1, **characterized in that** at least one formfit element (49), by means of which a securing ring (42) is fastened to the valve housing (34), is formed on each of the subsections (52).

9. Control valve (12) according to Claim 8, **characterized in that**, on an axial side face (43) of each subsection (52), at least one hook-shaped formfit element (49) is formed, which is designed to be open radially outward and which engages behind the securing ring (42) in the axial direction, so that the securing ring (42) bears both against the axial side face (43) of the valve housing (34) and against a radially extending section (50) of the hook-shaped formfit element (49) and holds the two subsections (52) in position in relation to one another.

10. Control valve (12) according to Claim 8, **characterized in that** the position of the valve housing (34) in a receptacle (31) is defined by means of the securing ring (42).

11. Control valve (12) according to Claim 1, **characterized in that** two subsections (52) are connected to one another via a hinge-like connection.

## Revendications

1. Soupape de commande (12) comprenant un boîtier de soupape (34) réalisé sensiblement sous forme cylindrique et un piston de commande (36) réalisé sensiblement sous forme cylindrique,
- la soupape de commande (12) pouvant être disposée à l'intérieur d'un logement cylindrique (31) et
- le piston de commande (36) étant disposé de manière déplaçable axialement à l'intérieur du boîtier de soupape (34),
- **caractérisée en ce que** le boîtier de soupape (34) se compose d'au moins deux sections partielles axiales (52), dont les extrémités (53) ouvertes dans la direction périphérique sont opposées et s'appliquent l'une contre l'autre dans la direction périphérique.

2. Soupape de commande (12) selon la revendication 1, **caractérisée en ce que** les extrémités ouvertes (53) des sections partielles (52) sont connectées l'une à l'autre par engagement par coopération de forme ou par liaison de matière.

3. Soupape de commande (12) selon la revendication 1, **caractérisée en ce que** deux butées axiales (54) espacées axialement l'une de l'autre pour le piston de commande (36) sont réalisées sur au moins l'une des sections partielles (52).

4. Soupape de commande (12) selon la revendication 1, **caractérisée en ce qu'**un logement de ressort (41) est réalisé sur au moins l'une des sections partielles (52) pour recevoir un élément de ressort (40) qui agit sur le piston de commande (36).

5. Soupape de commande (12) selon la revendication 1, **caractérisée en ce qu'**un logement de soupape antiretour (32) pour un corps de fermeture (33) d'une soupape antiretour est réalisé sur au moins l'une des sections partielles (52).

6. Soupape de commande (12) selon la revendication 1, **caractérisée en ce qu'**une douille (35) s'applique contre une surface d'enveloppe interne du boîtier de soupape (34), l'orientation de la douille par rapport au boîtier de soupape (34) étant fixée au moyen d'éléments de positionnement (55) réalisés sur au moins l'une des portions partielles.

7. Soupape de commande (12) selon la revendication 1, **caractérisée en ce que** les portions partielles (52) sont réalisées en matière plastique.

8. Soupape de commande (12) selon la revendication 1, **caractérisée en ce qu'**au moins un élément d'engagement par coopération de forme (49) est réalisé sur chacune des sections partielles (52), au moyen duquel élément une bague de fixation (42) est fixée sur le boîtier de soupape (34).

9. Soupape de commande (12) selon la revendication 8, **caractérisée en ce qu'**au moins un élément d'engagement par coopération de forme en forme de crochet (49) est réalisé sur une surface latérale axiale (43) de chaque section partielle (52), lequel élément est réalisé de manière ouverte radialement vers l'extérieur et vient en prise par l'arrière avec la bague de fixation (42) dans la direction axiale, de telle sorte que la bague de fixation (42) s'applique à la fois contre la surface latérale axiale (43) du boîtier de soupape (34) et contre une portion (50) s'étendant radialement de l'élément d'engagement par coopération de forme en forme de crochet (49) et maintient les deux sections partielles (52) en position relativement l'une à l'autre.

10. Soupape de commande (12) selon la revendication 8, **caractérisée en ce que** la position du boîtier de soupape (34) dans un logement (31) est fixée au moyen de la bague de fixation (42).

11. Soupape de commande (12) selon la revendication 1, **caractérisée en ce que** deux portions partielles (52) sont connectées l'une à l'autre par le biais d'une liaison de type charnière.
